# FASCICULE DE BREVET EUROPEEN

(11) **EP 0 581 693 B1**
(45) Date de publication et mention de la délivrance du brevet: **05.06.1996**
(21) Numéro de dépôt: 93420304.3
(22) Date de dépôt: 16.07.1993
(51) Int. Cl.: F16B 45/02

(54) **Mousqueton à galet de verrouillage automatique**
Karabinerhaken mit Rolle für automatische Verriegelung
Snap hook with roller for automatic locking

(30) Priorité: 29.07.1992 FR 9209673
(43) Date de publication de la demande: 02.02.1994
(73) Titulaire: ETABLISSEMENTS LUDGER SIMOND (société anonyme), F-74400 Chamonix Mont Blanc (FR)
(72) Inventeur: Lefebvre, Patrick, F-74400 Chamonix Mont Blanc (FR); Simond, Ludger, F-74400 Chamonix Mont Blanc (FR)
(74) Mandataire: Poncet, Jean-François

(56) Documents cités:
- FR-A- 324 714
- FR-A- 1 131 305
- US-A- 1 392 260
- US-A- 2 705 357

## Description

La présente invention concerne les dispositifs de liaison à accrochage rapide, plus communément appelés mousquetons.

Les mousquetons, qui sont largement mis en oeuvre dans l'industrie et pour la pratique de l'alpinisme, de la spéléologie et des sports nautiques comportent généralement un corps en forme de tige recourbée à profil général en C formant une branche longitudinale reliant entre elles une première zone incurvée se terminant par une première extrémité de corps et une seconde zone incurvée se terminant par une seconde extrémité de corps opposée. Un doigt de fermeture est articulé à la première extrémité de corps, et peut pivoter entre une position de fermeture dans laquelle il relie la première et la seconde extrémité du corps, et une position d'ouverture dans laquelle le doigt est pivoté pour s'écarter de la seconde extrémité du corps et réaliser un espace pour l'introduction d'un moyen d'accrochage.

Le doigt est généralement sollicité par un ressort le repoussant en position de fermeture, et il est ainsi susceptible d'être repoussé par l'utilisateur vers sa position d'ouverture à l'encontre de l'effort exercé par le ressort de rappel.

Une telle structure traditionnelle à corps en C fermé par un doigt pivotant présente à la fois une excellente résistance mécanique, une grande simplicité de réalisation et un poids réduit.

On a déjà cherché à prévoir des moyens de verrouillage interdisant le pivotement du doigt vers sa position d'ouverture, assurant ainsi une sécurité s'opposant à l'ouverture intempestive du mousqueton. Ces moyens de verrouillage sont généralement constitués par une bague montée à coulissement sur l'extrémité libre du doigt et venant coiffer l'extrémité libre du corps en position fermée du doigt. L'ouverture du doigt nécessite alors de manoeuvrer tout d'abord la bague pour la faire coulisser à l'écart de l'extrémité libre du corps, le doigt pouvant ensuite être pivoté vers sa position d'ouverture. La difficulté est alors que, lors de la fermeture, la bague s'oppose à la fermeture complète du doigt, et il est nécessaire d'actionner tout d'abord la bague à l'écart de l'extrémité libre du doigt, pour assurer la fermeture complète du doigt, et ensuite la bague peut venir coiffer l'extrémité libre du corps pour assurer le verrouillage. Ces manoeuvres multiples compliquent considérablement l'utilisation d'un mousqueton, de sorte que l'utilisateur est le plus souvent tenté de se passer de moyens de verrouillage.

De tels mousquetons à verrouillage classique ne sont pas adaptés par exemple pour des utilisations en conditions extrêmes, par exemple pour l'escalade d'une falaise, puisque leur manoeuvre nécessite le plus souvent l'usage des deux mains.

Le document FR-A-324 714 décrit un crochet de levage dont le corps est constitué d'une partie principale en forme d'anneau ouvert à doigt articulé, et d'une partie secondaire en anneau fermé articulée autour d'un axe de la partie principale. La partie secondaire verrouille le doigt articulé. Une telle structure est lourde et complexe, et ne présente pas les avantages d'un corps à profil en C. Le pivotement de partie secondaire provoque l'ouverture du doigt, ce qui est particulièrement dangereux en escalade. Il apparaît que deux mains sont nécessaires pour manoeuvrer ce dispositif.

Le document US-A-1 392 260 décrit une autre structure lourde et complexe, qui ne présente pas les avantages d'un corps à profil en C. Une manoeuvre intempestive du poussoir de verrouillage provoque inévitablement l'ouverture du dispositif, ce qui s'avère très dangereux. La disposition d'un galet pivotant de fermeture dans un corps ouvert ne présente pas une résistance mécanique suffisante, car une traction provoque l'écartement des branches du corps. La manoeuvre de ce dispositif nécessite également deux mains.

Le problème proposé par la présente invention est de concevoir un mousqueton à corps à profil général en C fermé par un doigt de verrouillage, dans lequel le verrouillage et le déverrouillage du doigt puissent être réalisés par le pivotement volontaire d'un organe de verrouillage placé au voisinage de l'extrémité articulée du doigt de mousqueton, de telle façon que les efforts de traction appliqués sur le mousqueton soient supportés par le corps. En effet, dans ce cas, le pivotement de cet organe de verrouillage peut être effectué d'une seule main par l'utilisateur, en même temps que l'ouverture du doigt, et dans des conditions extrêmes dans lesquelles le mousqueton est à bout de bras avec son ouverture dirigée à l'opposé de l'utilisateur pour permettre un accrochage le plus éloigné possible sur un élément d'accrochage.

Un tel mousqueton peut ainsi être utilisé sans nécessiter l'usage simultané de deux mains pour l'ouverture et/ou la fermeture du mousqueton, tout en présentant des caractéristiques de résistance mécanique, de légèreté et de fiabilité nécessaires et suffisantes pour interdire l'ouverture du doigt dans toutes les conditions d'utilisation.

En particulier, le verrouillage est assuré lors de l'escalade d'une voie, par exemple lors d'une chute, malgré les vibrations pouvant apparaître lors d'une telle utilisation.

Dans les cas où le mousqueton est utilisé avec un lien d'accrochage, communément appelé dégaine, l'invention vise en outre à assurer le verrouillage et le déverrouillage par le pivotement relatif du corps de mousqueton par rapport à la direction du lien d'accrochage, le lien d'accrochage provoquant lui-même le pivotement de l'organe de verrouillage. On facilite ainsi les opérations de verrouillage et de déverrouillage.

Selon un autre aspect de l'invention, le mousqueton peut être muni de moyens assurant le maintien du doigt en position d'ouverture, et assurant sa fermeture automatique dès qu'une charge de traction est appliquée sur le mousqueton. Cela facilite considérablement l'utilisation du mousqueton, par exemple dans le cas où l'utilisateur doit passer très vite la corde dans le mousqueton ou veut s'accrocher à un élément d'accrochage situé en une position relativement distante, nécessitant de l'atteindre à bout de bras. Il suffit alors de faire passer l'extrémité libre du corps du mousqueton dans une ouverture prévue dans l'élément d'ancrage, et une simple traction sur la corde ou sur le mousqueton provoque sa fermeture et son verrouillage.

Un autre objet de l'invention est de concevoir un tel mousqueton présentant un double verrouillage. L'organe de verrouillage lui-même est alors bloqué en rotation dans sa position de verrouillage, ce bloquage en rotation étant assuré par l'application d'une charge sur le mousqueton. Le déverrouillage nécessite alors d'enlever l'application de la charge, puis de manoeuvrer l'organe de verrouillage pour enfin ouvrir le doigt. La sécurité est alors encore augmentée.

Pour atteindre ces objets ainsi que d'autres, le mousqueton selon l'invention comprend :
- un corps en forme de tige recourbée à profil général en C formant une branche longitudinale reliant entre elles une première zone incurvée se terminant par une première extrémité de corps et une seconde zone incurvée opposée se terminant par une seconde extrémité de corps,
- un doigt de fermeture articulé à la première extrémité de corps, et mobile en pivotement entre une position de fermeture dans laquelle il relie la première et la seconde extrémité du corps, et une position d'ouverture dans laquelle le doigt est pivoté pour s'écarter de la seconde extrémité du corps,
- un galet monté rotatif dans la première zone incurvée du corps et coopérant avec le doigt pour interdire l'ouverture du doigt dans toutes les orientations de pivotement du galet à l'exception d'une orientation de déverrouillage dans laquelle il autorise l'ouverture du doigt,
- des moyens pour forcer le pivotement du galet à l'écart de son orientation de déverrouillage en fonctionnement normal, de sorte que l'ouverture du doigt nécessite de faire pivoter au préalable le galet de verrouillage pour l'amener en orientation de déverrouillage.

Selon une réalisation préférée, le galet comprend une gorge périphérique enveloppant partiellement la surface intérieure de première zone incurvée du corps, de sorte que le corps lui-même guide le galet dans ses mouvements de rotation.

Le galet peut comprendre lui-même une partie de préhension externe accessible pour la manipulation en rotation.

En alternative, le galet est muni de moyens de liaison à un lien d'accrochage, les moyens de liaison étant agencés de façon que le lien d'accrochage et le galet soient solidaires en rotation dans le plan du corps de mousqueton, de sorte que le pivotement du corps de mousqueton par rapport à la direction du lien d'accrochage provoque la rotation relative du galet dans le corps de mousqueton.

Selon un mode de réalisation perfectionné, le galet comprend en outre une tige de verrouillage montée à coulissement dans un alésage radial, la tige faisant saillie sur la surface périphérique de galet pour s'engager dans un trou de verrouillage du corps, la seconde extrémité de tige faisant saillie dans une lumière du galet pour être repoussée dans l'alésage radial par le lien d'accrochage. Un ressort sollicite la tige de verrouillage vers la position de déverrouillage.

D'autres objets, caractéristiques et avantages de la présente invention ressortiront de la description suivante de modes de réalisation particuliers, faite en relation avec les figures jointes, parmi lesquelles :
- la figure 1 est une vue de face d'un mousqueton selon un premier mode de réalisation de la présente invention ;
- la figure 2 est une vue de face montrant le galet de verrouillage du mode de réalisation de la figure 1 ;
- la figure 3 est une vue en coupe selon le plan A-A de la figure 2 ;
- la figure 4 illustre le mode de montage du galet dans le corps de mousqueton de la figure 1 ;
- la figure 5 représente une vue de face du mousqueton de la figure 1 en position de déverrouillage ;
- la figure 6 est une vue de face d'un mousqueton selon un second mode de réalisation de l'invention ;
- la figure 7 est une vue de face d'un mousqueton selon un troisième mode de réalisation de l'invention ;
- la figure 8 est une vue de face d'un mousqueton selon un quatrième mode de réalisation de l'invention ; et
- la figure 9 est une vue de face du galet de verrouillage du mousqueton de la figure 8.

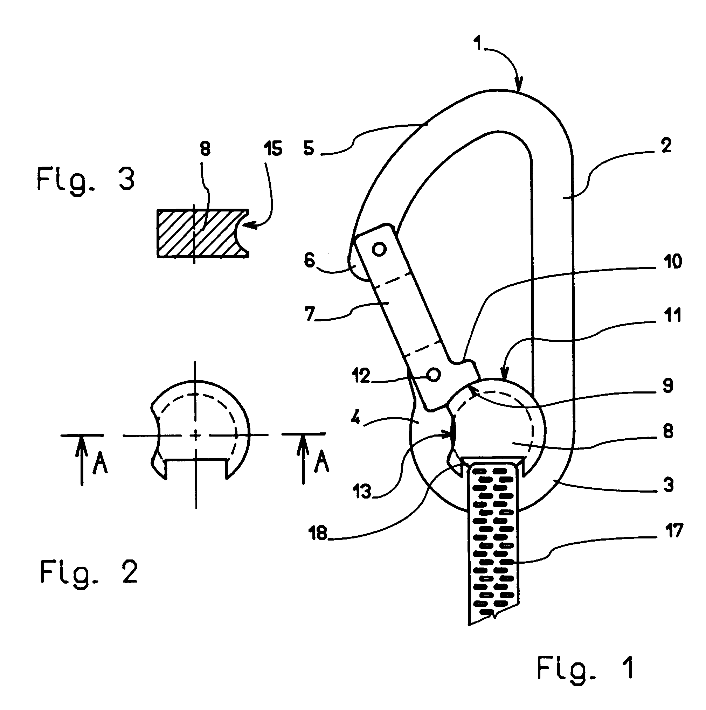

Dans le mode de réalisation représenté sur la figure 1, le mousqueton selon l'invention comprend un corps 1 en forme de tige recourbée à profil général en C, formant une branche longitudinale 2 reliant entre elles une première zone incurvée 3 se terminant par une première extrémité 4 de corps et une seconde zone incurvée 5 opposée se terminant par une seconde extrémité de corps 6.

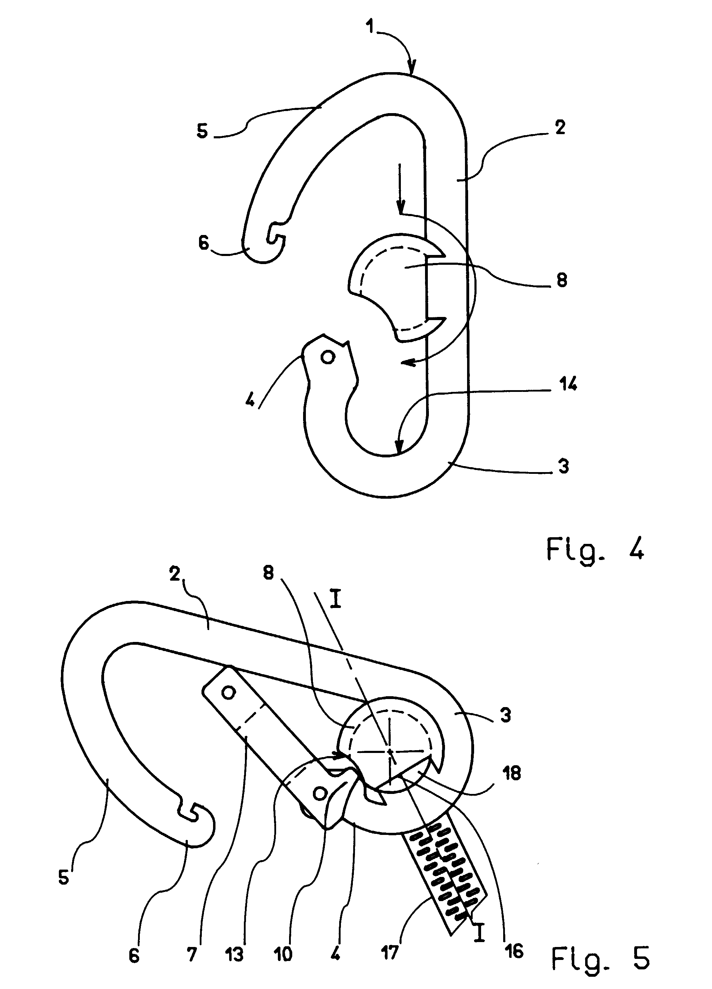

Un doigt de fermeture 7 est articulé à la première extrémité de corps 4, et est mobile en pivotement entre une position de fermeture représentée sur la figure 1, dans laquelle il relie la première extrémité 4 et la seconde extrémité 6 de corps, et une position d'ouverture représentée sur la figure 5 dans laquelle le doigt 7 est pivoté pour s'écarter de la seconde extrémité 6 de corps.

Un galet de verrouillage 8 est monté rotatif dans la première zone incurvée 3 du corps 1 et coopère avec le doigt 7 pour interdire l'ouverture du doigt dans toutes les orientations de pivotement du galet 8 à l'exception d'une orientation de déverrouillage dans laquelle le galet 8 autorise l'ouverture du doigt 7.

Le doigt 7 comprend une surface de verrouillage 9, par exemple la surface d'une excroissance 10 s'étendant transversalement par rapport à la direction longitudinale du doigt 7. Cette surface de verrouillage 9 vient en butée contre la surface extérieure périphérique 11 du galet 8, pour interdire le pivotement du doigt 7 autour de son axe de pivotement 12.

Le galet 8 comprend un évidement périphérique 13 qui, lorsqu'il vient en regard de la surface de verrouillage 9 de l'excroissance 10 du doigt 7, autorise le pivotement du doigt vers sa position d'ouverture.

La position du galet 8 lorsque l'évidement périphérique 13 vient en regard de la surface de verrouillage 9 de doigt est la position de déverrouillage, représentée sur la figure 5. On voit que, dans cette position, l'évidement périphérique 13 est conformé pour autoriser le passage de l'excroissance 10 lors du pivotement du doigt 7.

Ainsi, le galet 8 est monté à rotation dans la première zone incurvée 3 du corps 1 entre la position de verrouillage représentée sur la figure 1 et la position pivotée de déverrouillage représentée sur la figure 5.

Dans le mode de réalisation représenté, la première zone incurvée 3 du corps 1 du mousqueton comprend une surface intérieure 14, mieux visible sur la figure 4, dont le profil est généralement circulaire selon un angle supérieur à 180 degrés, par exemple d'environ 210 degrés. Le galet 8 comprend une gorge périphérique 15, mieux visible sur la figure 3, qui enveloppe partiellement la surface intérieure 14 de première zone incurvée 3 du corps, de sorte que la première zone incurvée 3 du corps guide le galet 8 dans ses mouvements de rotation. Le galet 8 est conformé pour venir s'engager avec un jeu limité dans la première zone incurvée 3 du corps 1. Pour permettre l'introduction du galet 8 dans le logement formé par la première zone incurvée 3 de corps, le galet 8 comprend un méplat 16 ménagé dans la gorge périphérique 15, méplat que l'on positionne contre la surface intérieure de la branche longitudinale 2, comme représenté sur la figure 4, pour introduire le galet 8 à coulissement dans la première zone incurvée 3. Après ce coulissement, on pivote le galet 8 pour l'amener en position de verrouillage représentée sur la figure 1 ou en position de déverrouillage représentée sur la figure 5. Dans ces positions, le galet 8 ne peut plus sortir de la première zone incurvée 3 de corps, dans laquelle il pivote librement autour d'un axe sensiblement perpendiculaire au plan général du corps 1.

Dans ce même mode de réalisation des figures 1 à 5, le mousqueton est associé à un lien d'accrochage 17 tel qu'une dégaine, le lien d'accrochage assurant sa liaison avec des éléments d'accrochage extérieurs non représentés. Le galet 8 est muni de moyens de liaison audit lien d'accrochage 17. Dans ce mode de réalisation, les moyens de liaison comprennent une encoche 18 ménagée à la périphérie du galet 8. Le lien d'accrochage 17 traverse l'encoche 18 entre le galet 8 et le corps 1 de mousqueton. L'encoche 18 est conformée pour avoir une section sensiblement égale à la section du lien d'accrochage 17. De cette façon, le lien d'accrochage 17 et le galet 8 sont solidaires en rotation l'un de l'autre dans le plan du corps de mousqueton. De cette façon, le pivotement du corps de mousqueton par rapport à la direction du lien d'accrochage, par exemple le pivotement du mousqueton comme représenté sur la figure 5 par rapport à la direction I-I du lien d'accrochage 17, provoque la rotation relative du galet 8 dans le corps de mousqueton. Cette rotation peut amener le galet 8 jusqu'en position de déverrouillage représentée sur la figure 5, ou peut ramener le galet 8 en position verrouillée comme sur la figure 1.

De la sorte, le pivotement relatif du corps 1 de mousqueton par rapport au lien d'accrochage 17 permet d'assurer automatiquement le verrouillage ou le déverrouillage du mousqueton.

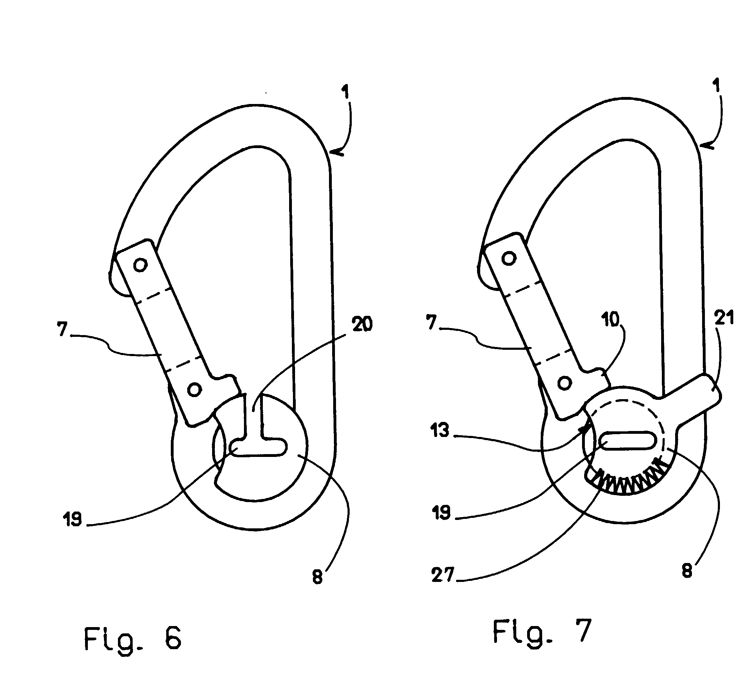

La figure 6 représente une variante dans laquelle le galet 8 comporte une lumière 19 susceptible d'être traversée par le lien d'accrochage tel que le lien 17 des figures 1 et 5. La lumière 19 peut également être ouverte par une fente 20. On comprend que, dans ce mode de réalisation, un lien d'accrochage 17 placé dans la lumière 19 permet de faire pivoter le galet 8 comme dans le mode de réalisation des figures 1 et 5. Toutefois, ce mode de réalisation de la figure 6 réduit le frottement entre le lien d'accrochage 17 et le corps 1 de mousqueton lors des manoeuvres de pivotement entre le verrouillage et le déverrouillage.

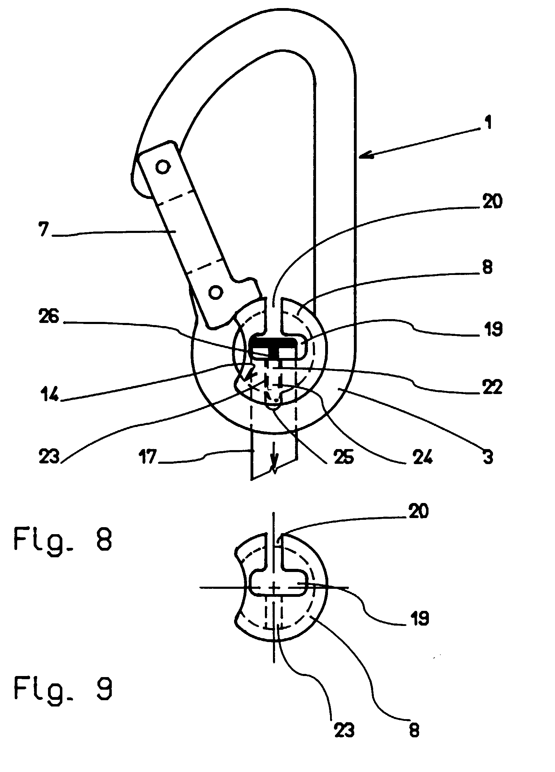

La figure 7 représente un autre mode de réalisation dans lequel le galet 8 est muni d'une partie de préhension externe 21, accessible pour la manipulation du galet 8 en rotation. Un ressort de rappel 27, en appui sur le corps 1 et sur le galet 8, repousse le galet 8 à l'écart de son orientation de déverrouillage. Le déverrouillage est alors obtenu en actionnant tout d'abord la partie de préhension externe 21 pour faire pivoter le galet 8 jusqu'en position de déverrouillage pour amener l'évidement périphérique 13 en regard de l'excroissance 10 du doigt 7, le doigt 7 pouvant ensuite être pivoté vers sa position d'ouverture. Lorsqu'on relâche le doigt 7, le ressort 27 ramène le galet 8 en position de verrouillage.

Sur cette même figure 7, on a également représenté une lumière 19 dans laquelle peut être passé le lien d'accrochage 17.

La figure 8 représente un autre mode de réalisation permettant d'assurer un double verrouillage du mousqueton. Dans ce cas, le galet 8 comprend une lumière 19 et une fente 20 comme dans le mode de réalisation de la figure 6. Le galet 8 comprend en outre une tige de verrouillage 22 montée à coulissement dans un alésage radial 23 débouchant d'une part sur la surface périphérique du galet 8 et d'autre part dans la lumière 19 du galet 8. Une extrémité 24 de la tige de verrouillage 22 est destinée à faire saillie de la surface périphérique du galet 8 pour s'engager dans un trou de verrouillage 25 prévu dans la surface intérieure 14 de première zone incurvée 3 du corps, et pour interdire ainsi la rotation du galet 8. La seconde extrémité 26 de la tige de verrouillage 22 fait saillie dans la lumière 19 du galet 8 pour être repoussée dans l'alésage radial 23 par le lien d'accrochage 17 lorsque celui-ci est sous tension. Un ressort, non représenté sur la figure, sollicite la tige de verrouillage 22 en direction de la lumière 19, pour extraire l'extrémité 24 hors du trou de verrouillage correspondant 25. Ce ressort libère ainsi la rotation du galet 8.

Dans tous les modes de réalisation, l'évidement périphérique 13 du galet 8 peut avantageusement être conformé de façon qu'il forme butée maintenant le doigt 7 en position ouverte lorsque le galet 8 est sollicité en pivotement dans le sens du déverrouillage. De cette façon, lorsque l'utilisateur maintient le galet 8 en position de déverrouillage, le doigt se trouve automatiquement maintenu en position ouverte, facilitant le passage de l'extrémité libre 6 du corps de mousqueton dans un anneau d'accrochage, le doigt 7 se refermant automatiquement dès que l'utilisateur libère le galet 8.

La présente invention n'est pas limitée aux modes de réalisation qui ont été explicitement décrits, mais elle en inclut les diverses variantes et généralisations contenues dans le domaine des revendications ci-après.

## Revendications

1. Mousqueton présentant une forme générale en anneau fermé, comprenant :
- un corps (1) en forme de tige recourbée à profil général en C formant une branche longitudinale (2) reliant entre elles une première zone incurvée (3) se terminant par une première extrémité (4) de corps et une seconde zone incurvée (5) opposée se terminant par une seconde extrémité (6) de corps,
- un doigt de fermeture (7) articulé à la première extrémité (4) de corps, et mobile en pivotement entre une position de fermeture dans laquelle il relie la première (4) et la seconde (6) extrémité du corps, et une position d'ouverture dans laquelle le doigt (7) est pivoté pour s'écarter de la seconde extrémité (6) du corps,
caractérisé en ce qu'il comprend :
- un galet (8) monté rotatif dans la première zone incurvée (3) du corps et coopérant avec le doigt (7) pour interdire l'ouverture du doigt dans toutes les orientations de pivotement du galet (8) à l'exception d'une orientation de déverrouillage dans laquelle il autorise l'ouverture du doigt (7),
- des moyens (21, 17) pour forcer le pivotement du galet (8) à l'écart de son orientation de déverrouillage en fonctionnement normal, de sorte que l'ouverture du doigt (7) nécessite de faire pivoter au préalable le galet (8) de verrouillage pour l'amener en orientation de déverrouillage.

2. Mousqueton selon la revendication 1, caractérisé en ce que le galet (8) comprend une gorge périphérique (15) enveloppant partiellement la surface intérieure (14) de première zone incurvée (3) du corps, de sorte que la première zone incurvée (3) du corps guide le galet (8) dans ses mouvements de rotation.

3. Mousqueton selon l'une des revendications 1 ou 2, caractérisé en ce que le galet (8) comprend une partie de préhension externe (21) accessible pour la manipulation du galet (8) en rotation, un ressort de rappel (27) en rotation étant en appui sur le corps (1) et sur le galet pour repousser le galet (8) à l'écart de l'orientation de déverrouillage.

4. Mousqueton selon l'une des revendications 1 ou 2, caractérisé en ce que :
- le mousqueton est associé à un lien d'accrochage (17) pour sa liaison avec des éléments d'accrochage extérieurs,
- le galet (8) est muni de moyens de liaison audit lien d'accrochage (17) agencés de façon que le lien d'accrochage (17) et le galet (8) soient solidaires en rotation dans le plan du corps de mousqueton, de sorte que le pivotement du corps de mousqueton (1) par rapport à la direction (I-I) du lien d'accrochage (17) provoque la rotation relative du galet (8) dans le corps de mousqueton.

5. Mousqueton selon la revendication 4, caractérisé en ce que :
- les moyens de liaison comprennent une encoche (18) ménagée à la périphérie du galet (8),
- le lien d'accrochage (17) traverse ladite encoche (18) entre le galet (8) et le corps (1) de mousqueton.

6. Mousqueton selon la revendication 4, caractérisé en ce que les moyens de liaison comprennent une lumière (19) formée dans le galet (8) et traversée par le lien d'accrochage (17).

7. Mousqueton selon l'une quelconque des revendications 1 à 6, caractérisé en ce que :
- le doigt (7) comprend une surface de verrouillage (9) venant en butée sur la surface extérieure périphérique (11) de galet pour interdire son pivotement,
- le galet (8) comprend un évidement périphérique (13) autorisant le pivotement du doigt (7) lorsque l'évidement vient en regard de la surface de verrouillage (9) du doigt en position de déverrouillage.

8. Mousqueton selon la revendication 7, caractérisé en ce que l'évidement périphérique (13) du galet (8) est conformé de façon qu'il forme butée maintenant le doigt (7) en position ouverte lorsque le galet est sollicité en pivotement dans le sens du déverrouillage.

9. Mousqueton selon la revendication 6, caractérisé en ce que :
- le galet (8) comprend en outre une tige de verrouillage (22) montée à coulissement dans un alésage radial (23) débouchant d'une part sur la surface périphérique du galet (8) et d'autre part dans la lumière (19) du galet (8),
- une extrémité (24) de la tige (22) de verrouillage est destinée à faire saillie de la surface périphérique de galet (8) pour s'engager dans un trou de verrouillage (25) prévu dans la surface intérieure (14) de première zone incurvée (3) du corps et pour interdire la rotation du galet (8),
- une seconde extrémité (26) de la tige de verrouillage (22) fait saillie dans ladite lumière (19) du galet (8) pour être repoussée dans l'alésage radial (23) par le lien d'accrochage (17),
- un ressort sollicite la tige de verrouillage (22) en direction de la lumière (19) du galet pour extraire l'extrémité de la tige (24) hors du trou de verrouillage (25) et libérer la rotation du galet (8).

## Patentansprüche

1. Karabinerhaken in der grundlegenden Form eines geschlossenen Ringes, mit:
- einem Hauptelement (1) in Form von gebogenen Stange, die ein im wesentlichen C-förmiges Profil aufweist, bestehend aus einem in Längsrichtung verlaufenden Arm (2), der sich über einen ersten gekrümmten Bereich (3) zu einem ersten Ende (4) des Hauptelementes hin und über einen entgegengesetzt gekrümmten zweiten Bereich (5) zu einem zweiten Ende (6) des Hauptelementes hin erstreckt, und
- einem Sperrbügel (7), beweglich an dem an dem ersten Ende (4) des Hauptelementes angebracht ist, und der schwenkbar ist zwischen einer Schließstellung, in der er das erste (4) und das zweite (6) Ende des Hauptelementes miteinander verbindet, und einer Öffnungsstellung, in der der Sperrbügel (7) so geschwenkt ist, daß er von dem zweiten Ende (6) des Hauptelementes fort weist,
dadurch gekennzeichnet, daß er folgendes aufweist:
- eine Rolle (8), die drehbar in dem ersten gekrümmten Bereich (3) des Hauptelementes angebracht ist, und die mit dem Sperrbügel (7) zusammenwirkt, um ein Öffnen des Sperrbügels in allen Drehstellungen der Rolle (8) mit Ausnahme einer Entriegelungsstellung zu verhindern, in welcher sie ein Öffnen des Sperrbügels (7) zuläßt, und
- Mittel (21, 17), um im Normalbetrieb ein Drehen der Rolle (8) von der Entriegelungsstellung weg zu erzwingen, derart daß ein Öffnen des Sperrbügels (7) erfordert, daß die Verriegelungsrolle (8) zuvor in eine Entriegelungsstellung gedreht werden muß.

2. Karabinerhaken nach Anspruch 1, dadurch gekennzeichnet, daß die Rolle (8) an ihrem Rand eine Rille (15) aufweist, die die nach innen weisende Fläche (14) des ersten gekrümmten Bereiches (3) des Hauptelementes teilweise umfaßt, so daß der erste gekrümmte Bereich (3) des Hauptelementes die Rolle (8) in ihren Drehbewegungen führt.

3. Karabinerhaken nach Anspruch 1 oder 2, dadurch gekennzeichnet, daß die Rolle (8) einen externen Griff (21) zum Drehen der Rolle (8) und eine Rückstellfeder (27) aufweist, die bei Drehung an dem Hauptelement (1) und der Rolle angreift, um die Rolle (8) von der Entriegelungsstellung weg zu drücken.

4. Karabinerhaken nach Anspruch 1 oder 2, dadurch gekennzeichnet, daß:
- dem Karabinerhaken zur Verbindung mit anderen Koppelelementen ein Koppelband (17) zugeordnet ist,
- die Rolle (8) mit Verbindungseinrichtungen zur Verbindung mit diesem Koppelbandes (17) versehen ist, die so angeordnet sind, daß das Koppelband (17) und die Rolle (8) bezüglich des Hauptelementes des Karabinerhakens drehbar verbunden sind derart, daß ein Schwenken des Hauptelementes des Karabinerhakens (1) bezüglich der Richtung (I-I) des Koppelbandes (17) eine Drehung der Rolle (8) relativ zum Hauptelement des Karabinerhakens erzeugt.

5. Karabinerhaken nach Anspruch 4, dadurch gekennzeichnet, daß:
- die Verbindungseinrichtungen eine am Rand der Rolle (8) angeordnete Nut (18) enthält,
- das Koppelband (17) zwischen der Rolle (8) und dem Hauptelement (1) des Karabinerhakens durch die Nut (18) verläuft.

6. Karabinerhaken nach Anspruch 4, dadurch gekennzeichnet, daß die Verbindungseinrichtungen eine in der Rolle (8) gebildete Aussparung (19) enthalten, durch die das Koppelband (17) verläuft.

7. Karabinerhaken nach einem der Ansprüche 1 bis 6, dadurch gekennzeichnet, daß:
- der Sperrbügel (7) eine Verriegelungsfläche (9) enthält, die mit der äußeren Umfangsfläche (11) der Rolle im Anschlag ist, um deren Drehen zu verhindern,
- die Rolle (8) an ihrem Umfang eine Ausnehmung (13) aufweist, die ein Schwenken des Sperrbügels (7) zuläßt, wenn die Ausnehmung der Verriegelungsfläche (9) des Sperrbügels in der Entriegelungsstellung gegenübersteht.

8. Karabinerhaken nach Anspruch 7, dadurch gekennzeichnet, daß die Ausnehmung (13) am Umfang der Rolle (8) so ausgebildet ist, daß sie einen Anschlag bildet, durch den der Sperrbügel (7) in der Öffnungsstellung gehalten wird, wenn die Rolle zur Entriegelung gedreht werden soll.

9. Karabinerhaken nach Anspruch 6, dadurch gekennzeichnet, daß:
- die Rolle (8) zusätzlich einen Verriegelungsbolzen (22) enthält, der in einer radialen Ausbohrung (23) geführt ist, die ausgehend von der Umfangsfläche der Rolle (8) in die Aussparung (19) der Rolle (8) mündet,
- ein Ende (24) des Verriegelungsbolzens (22) einen Vorsprung bezüglich der Randfläche der Rolle (8) bildet, um in ein Verriegelungsloch (25) einzugreifen, das in der nach innen weisenden Oberfläche (14) des ersten gekrümmten Bereiches (3) vorgesehen ist, um eine Drehung der Rolle (8) zu verhindern,
- ein zweites Ende (26) des Verriegelungsbolzens (22) einen Vorsprung innerhalb der Aussparung (19) der Rolle (8) bildet, um durch das Koppelband (17) in die radiale Ausbohrung (23) zurück gedrückt werden zu können,
- eine Feder den Verriegelungsbolzen (22) in Richtung der Aussparung (19) der Rolle drückt, um das Ende des Bolzens (24) aus dem Verriegelungsloch (25) herauszuziehen und eine Drehung der Rolle (8) freizugeben.

## Claims

1. Snap-hook having the general shape of a closed ring, comprising :
- a curved body (1) in the form of a rod and having a generally C-shape profile forming a longitudinal branch (2) between a first curved area (3) ending at a first body end (4) and an opposite second curved area (5) ending at a second body end (6),
- a closure finger (7) articulated to said first body end (4) and able to pivot between a closing position in which it spans said first (4) and second (6) ends of said body and an open position in which said finger (7) is pivoted away from said second end (6) of said body, characterised in that it comprises :
- a roller (8) rotatably mounted in said first curved area (3) of said body and cooperating with said finger (7) to prevent opening of said finger in all angular positions of said roller (8) except for an unlocking position in which it enables opening of said finger (7),
- means (21, 17) for forcibly turning said roller (8) away from its unlocking position in normal operation, so that opening of said finger (7) requires rotation of said locking roller (8) into said unlocking position beforehand.

2. Snap-hook according to claim 1, characterised in that said roller (8) comprises a peripheral groove (15) partially enveloping the interior surface (14) of said first curved area (3) of said body so that said first curved area (3) of said body guides rotation of said roller (8).

3. Snap-hook according to claims 1 or 2, characterised in that said roller (8) has an accessible external holding part (21) for rotating it, a return spring (27) bearing on said body (1) and on said roller to rotate said roller (8) away from its unlocking position.

4. Snap-hook according to claims 1 or 2, characterised in that :
- said snap-hook is associated with a line (17) for connecting it to external attachment means,
- said roller (8) is provided with means for coupling it to said line (17) so that said line (17) and said roller (8) are locked together in rotation in the plane of said snap-hook body so that pivoting of said snap-hook body (1) relative to the direction (I-I) of said line (17) causes rotation of said roller (8) relative to said snap-hook body.

5. Snap-hook according to claim 4, characterised in that :
- said coupling means comprise a notch (18) at the periphery of said roller (8),
- said line (17) passes through said notch (18) between said roller (8) and said snap-hook body (1).

6. Snap-hook according to claim 4, characterised in that said coupling means comprise an eye (19) in said roller (8) through which said line (17) passes.

7. Snap-hook according to any of claims 1 to 6, characterised in that :
- said finger (7) comprises a locking surface (9) abutting against the peripheral outside surface (11) of said roller to prevent it pivoting,
- said roller (8) comprises a peripheral recess (13) enabling pivoting of said finger (7) when said recess faces said locking surface (9) of said finger in its unlocking position.

8. Snap-hook according to claim 7, characterised in that said peripheral recess (13) in said roller (8) is shaped to form an abutment to hold said finger (7) in its open position when said roller is rotated in the unlocking direction.

9. Snap-hook according to claim 6, characterised in that :
- said roller (8) further comprises a locking rod (22) sliding in a radial bore (23) opening onto the peripheral surface of said roller (8) and into said eye (19) in said roller (8),
- one end (24) of said locking rod (22) is intended to project from said peripheral surface of said roller (8) into a locking hole (25) on the interior surface (14) of said first curved area (3) of said body to prevent rotation of said roller (8),
- a second end (26) of said locking rod (22) projects into said eye (19) in said roller (8) to be pushed back into said radial bore (23) by said line (17),
- a spring urges said locking rod (22) towards said eye (19) in said roller to extract the end of said rod (24) from said locking hole (25) and free said roller (8) to rotate.
